# EUROPEAN PATENT APPLICATION

(11) **EP 4 046 777 A1**
(43) Date of publication of application: **24.08.2022**
(21) Application number: 22157851.1
(22) Date of filing: 21.02.2022
(51) Int. Cl.: B29C 64/129, B29C 64/282, B29C 64/286, B29C 64/393, B33Y 10/00, B33Y 30/00, B33Y 50/02

(54) **METHOD FOR IMPROVING LIFESPAN OF LCD OF A MSLA 3D PRINTER**

(30) Priority: 23.02.2021 KR 20210023740
(71) Applicant: Huvitz Co., Ltd., Anyang-si, 14055 (KR); Huvitz Ossvis Co., Ltd., Dongan-gu Gyeonggi-do Anyang-si 14055 (KR)
(72) Inventor: LEE, Hee Jae, 16014 103-3804, 307, 4, Eunyeoul-ro 67 beon-gil, Osan-si, (KR); KIM, Joon Ha, 21552 101-2103, 65, Guwol-ro, Namdong-gu, Incheon, (KR)
(74) Representative: Wellburn, Daniel

(57) **Abstract**

The present invention relates to a method for improving a lifespan of a liquid crystal display (LCD) (230) of a masked stereolithography (MSLA) 3D printer (150), the method including the steps of: slicing a three-dimensional (3D) image into two-dimensional (2D) images; outputting the 2D images to the LCD (230); calculating irradiation area coordinates of UV LEDs (221) in accordance with the 2D images; and irradiating UV light of the UV LEDs (221) on an area matching with the 2D images in accordance with the calculated irradiation area coordinates of the UV LEDs (221).

## Description

The present application claims the benefit of Korean Patent Application No. 10-2021-0023740 filed in the Korean Intellectual Property Office on 23 February 2021.

### FIELD

The present disclosure relates to a method for improving a lifespan of a liquid crystal display (LCD) of a masked stereolithography (MSLA) 3D printer, and more specifically, a method for improving a lifespan of an LCD of an MSLA 3D printer that is capable of controlling ultraviolet (UV) light-emitting diodes (LEDs) to allow UV light of the UV LEDs to be irradiated only onto an area of the LCD which matches with a masking image.

### BACKGROUND

As a method for making a three-dimensional solid object, there are methods for making a mock-up manually and for making the 3D solid object by a cutting process using a numerical control machine tool.

The manual mock-up making method is low in manufacturing cost, but it is hard to achieve precise shapes when machining and the process requires a lot of manufacturing time. Further, with the cutting process it is possible to make a precise object, but the process involves a high manufacturing cost and has limitations in the types of shape that are machinable.

Recently, a 3D printer, which makes a 3D object using 3D drawing data produced through 3D modeling, has been widely used. The 3D printer is a machine that makes use of a material such as liquid, powder, metal, or the like to make the 3D solid object in accordance with the 3D drawing data.

Through the use of the 3D printer, advantageously, manufacturing cost and time may be substantially reduced, individual customized objects may be made, and solid objects complicated in shape may be manufactured easily. Accordingly, errors in the solid objects may be easily corrected at the time of manufacture, and the manufacturing cost, material cost, and labor cost are reduced.

3D printers having many such advantages are applied in a variety of fields such as automotive, aerospace, construction, medicine, home appliances, toys, and the like.

Examples of 3D printers include, for example: a stereo lithography apparatus (SLA) 3D printer that scans a laser beam onto UV curable resin and cures the scanned portion, a digital light processing (DLP) 3D printer that irradiates light onto the underside of a reservoir storing UV curable resin, an LCD 3D printer that laminates molded resin products on top of a build plate using UV light sources (e.g. LEDs) and an LCD panel, a selective laser sintering (SLS) 3D printer that sinters functional polymers or metal powder, a fused deposition modeling (FDM) 3D printer that extrudes and molds a melted resin, a laser-aid direct metal tooling (DMT) 3D printer that directly molds metal through high power laser beams, and a laminated object manufacturing (LOM) 3D printer.

In case of the conventional LCD 3D printer among them, all of the UV LEDs are turned on and used as backlight, and next, only a desired area for printing is masked using the LCD to block portions of the UV light from the LEDs.

In this case, however, the LCD may have low reliability and a short lifespan due to heating from the UV LEDs. Because of the short lifespan of the LCD, the 3D printer undesirably requires repeated maintenance.

### SUMMARY

Accordingly, the present disclosure has been made in view of the above-mentioned problems occurring in the related art, and it is an object of the present disclosure to provide a method for improving a lifespan of an LCD of an MSLA 3D printer that is capable of irradiating UV light of UV LEDs only onto an area of the LCD which matches with the position of a masking image.

It is another object of the present disclosure to provide a method for improving a lifespan of an LCD of an MSLA 3D printer by calculating emission time of UV LEDs to estimate the lifespan of the LCD and suggest an efficient output product position.

To accomplish the above-mentioned objects, there is provided a method for improving a lifespan of a liquid crystal display (LCD) of a masked stereolithography (MSLA) 3D printer, the method including the steps of: slicing a three-dimensional (3D) image into two-dimensional (2D) images; outputting the 2D images to the LCD; calculating emission area coordinates of UV LEDs in accordance with the 2D images; and irradiating UV light of the UV LEDs on an area matching with the 2D images in accordance with the calculated emission area coordinates of the UV LEDs.

The LCD, when provided with the 2D images, is configured to allow light to pass therethrough in the area to be irradiated to form the pattern dictated by the 2D images. In embodiments, the calculated emission area coordinates correspond to (e.g. match) the coordinates of the area to be irradiated.

According to embodiments, desirably, the step of calculating the emission area coordinate of the UV LEDs is carried out by calculating a diagonal length from an area obtained by multiplying a width of the image with the greatest area among the sliced 2D images by a height thereof and then calculating the radius of the diagonal length as the LED emission area.

According to embodiments, desirably, the method may further include the step of collecting and storing the accumulated emission time (i.e. 'on' time, or emission time, or radiation time) data of the UV LEDs to calculate average emission time (i.e. 'on' time, or emission time, or radiation time) per (or by) area.

According to embodiments, desirably, the images are output to an LCD area having the shortest range of the accumulated emission time. In this case, the UV LEDs corresponding to the LCD area have the shortest accumulated emission time and so the risk of overuse of some UV LEDs is reduced and the need for (and frequency of) maintenance of the UV LED panel is reduced.

### BRIEF DESCRIPTION OF THE DRAWINGS

The above and other objects, features and advantages will be apparent from the following detailed description of embodiments of the invention in conjunction with the accompanying drawings, in which:
FIG. 1 is a block diagram showing a method for controlling UV LEDs of an MSLA 3D printer according to the present invention;
FIG. 2 is a schematic showing a method for controlling divided UV LED areas to emit UV light of UV LEDs only from an area matching with a masking image of an LCD according to embodiments; and
FIG. 3 is a schematic showing the output of the UV light of only the UV LEDs on an area matching with a sliced 2D image, and a process for managing the emission time of the UV LEDSs, according to embodiments.

### DETAILED DESCRIPTION OF EMBODIMENTS

Objects, characteristics and advantages of the claimed invention will be more clearly understood from the detailed description as will be described below and the attached drawings. It is to be understood that the disclosed embodiments are merely exemplary and the claimed invention can be embodied in various forms. Embodiments described in detail so that the skilled person can more easily put the invention into practice However, the embodiments do not limit the claims. The invention is defined by the scope of the appended claims.

In the description, the thicknesses of the lines or the sizes of the components shown in the drawing may be magnified for the clarity and convenience of the description. In the description, further, the corresponding parts in the embodiments are indicated by corresponding reference numerals.

A term 'and/or' includes a combination of a plurality of relevant and described items or any one of a plurality of related and described items. An expression referencing a singular value additionally refers to a corresponding expression of the plural number, unless explicitly limited otherwise by the context. In this application, terms, such as "comprise", "include", or 'have", are intended to designate those characteristics, numbers, steps, operations, elements, or parts which are described in the specification, or any combination of them that exist.

Hereinafter, embodiments will be described and explained in detail with reference to the attached drawings.

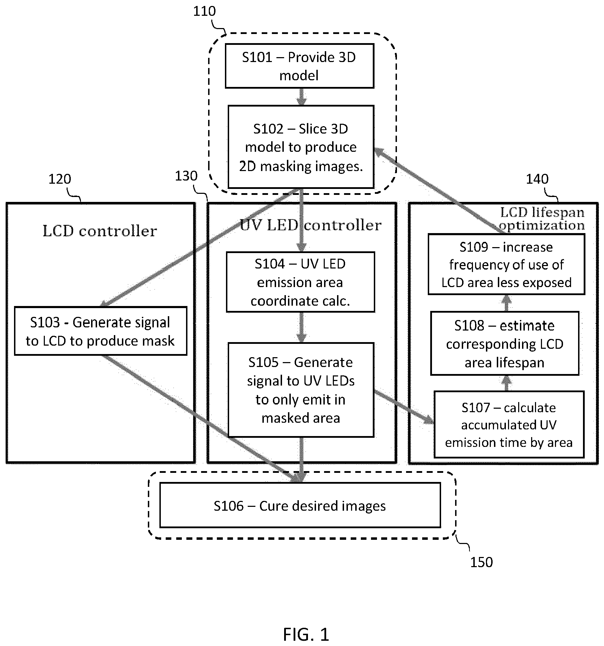

FIG. 1 is a block diagram showing a method for controlling UV LEDs of an MSLA 3D printer according to embodiments as well as a schematic of the hardware components for carrying out the method.

Referring to FIG. 1, a method for improving a lifespan of an LCD of an MSLA 3D printer is carried out by controlling UV LEDs only on an area matching with a masking image of the LCD to emit UV light. That is, the respective UV LEDs are controlled by area, so that the portion of the LCD onto which the UV light of the UV LEDs is irradiated is minimized. The LCD transfers the image to the area to be cured by selectively allowing light from the UV LEDs beneath to pass through to the areas to be cured. The LCD areas corresponding to the areas not to be cured do not allow the UV light to pass through. The UV LEDs (undesirably) generate heat in areas of the LCD which are irradiated. By turning on only LEDs which correspond to the area of the LCD which is configured to allow the UV light to pass, unnecessary heating of the areas of the LCD which do not allow the UV light to pass is avoided.

To do this, and in accordance with a method according to embodiments, in a first step S201, a 3D model (i.e. 3D virtual object) is created in a virtual environment. The 3D model may take the form of an image on a computer display. The 3D model may be, for example a 3D CAD model. The 3D model is representative of the part to be built by the 3D printer. In a second step S102, the 3D model is sliced to produce 2D masking images. In a third step S103, the 2D masking images are provided to an LCD controller and an LCD controller generates a signal based on the 2D images to form a mask. The LCD controller outputs an LCD masking image based on the mask, the LCD masking image being the same image as the produced 2D masking image. The LCD image is then output to a 3D printer to cure a pattern in resin matching the 2D masking image.

In a fourth step, a UV LED controller 130 calculates a coordinate (or coordinates) of an LED emission area and activates (i.e. turns on) UV LEDs to emit UV light, wherein the UV LEDs emit UV light only in the area of the LCD matching with the LCD masking image.

In the conventional MSLA 3D printer, all of the UV LEDs are turned on and used as a backlight, and then, only a desired portion for printing exposed using the LCD. According to embodiments, however, the UV light is controlled to be emitted only in an area matching with the LCD masking image by being emitted from the area of the UV LEDs corresponding to (i.e. matching or overlapping with) the LCD masking image. Thus, the LCD is irradiated only in an area corresponding to (i.e. matching or overlapping with) the LCD masking image. The UV LED controller then outputs the coordinates of the UV LEDs in a UV LED array of the 3D printer in order to cause the corresponding UV LEDs to emit UV light in the area corresponding to the LCD masking image at the same time as the LCD displays the LCD masking image.

In an embodiment, to calculate the UV LED emission area, when the 3D model (e.g. a 3D CAD model) is sliced into the 2D images, a diagonal length is calculated from an area obtained by multiplying a width of the image with the greatest area among the sliced 2D images by a height thereof. Alternatively, the diagonal length is calculated as the diagonal of a rectilinear area defined by the width of the image with the greatest area among the sliced 2D images and a height thereof. Alternatively, the diagonal length is calculated as the diagonal of a rectilinear area having (i) the width of the image with the greatest width among the sliced 2D images, and (ii) the height of the image with the greatest height among the sliced 2D images.

Next, a radius r of half the diagonal length is calculated and an LED emission area S is defined as S = π r ², where S is emission area and r is the radius of a circle defining the emission area. Using the emission area defined in such a way, the whole of all of the LCD masking images are irradiated with UV light from the UV LEDs during printing. Advantageously, only one processing step is needed to calculate an emission area and the emission area is sufficiently large as to be usable for printing the entire 3D object.

Alternatively, the emission area (or coordinates) of the UV LEDs can be calculated per frame (i.e. per 2D layer to be printed). In this case, if the LCD masking images are different for each frame, the UV LEDs which emit light for each frame can be different between frames (while always corresponding to the LCD masking image of the individual frames). That is, the UV light is emitted from the UV LEDs only in the area corresponding to the coordinates of the area of the LCD masking image on a frame by frame basis.

Referring again to FIG. 1, in a seventh step S107, the accumulated emission time of the UV LEDs (e.g. those located in the area corresponding to the 2D image applied to the LCD) is calculated. In an eight step S108, the lifespan of the LCD is estimated.

Accordingly, the emission time data of the UV LEDs located in the LCD masking area corresponding to the 2D image applied to the LCD are collected to manage total emission time of the UV LEDs, so that the lifespans of both of the LCD and the UV LEDs can be improved.

In the seventh step S107, average accumulated emission times per area of the UV LED array are calculated. In an eighth step S108, lifespan of the corresponding LCD area is estimated. In a ninth step S109, the areas of the LCD which are less exposed are identified and these areas are fed back to the image processor (or directly to the LCD and UV LED controllers) to allow output of the LCD masking images to an area of the LCD corresponding to UV LEDs having the shortest average accumulated emission times per area. The lifespan of the LCD is thereby improved, because the frequency of use of the LCD area less exposed can be increased and the frequency of use of the LCD area most exposed can be decreased.

In an embodiment, there is provided a 3D printing system comprising an processing module 110 arranged to carry out the first and second steps S101, S102. The image processing module 110 may be (or be a part of) a computer loaded with software arranged to carry out the first and second steps. The software may be loaded on a transitory or non-transitory computer readable medium. The 3D printing system further comprises an LCD controller 120 arranged to carry out the third step S103 and a UV LED controller arranged to carry out the fourth and fifth steps S104, S105. The LCD controller 120 is communicatively connected to an LCD, and the UV LED controller is communicatively connected to a UV LED backlight array. The UV LED is arranged behind the LCD module to illuminate the LCD module. The UV LED module and LCD module are part of a 3D printer 150 arranged to print a 3D object corresponding the 3D model. The 3D printer 150 is arranged to carry out the sixth step S106. The 3D printing system further comprises an LCD lifespan optimization module 140 arranged to carry out the seventh, eighth and ninth steps S107, S108, S109. The LCD lifespan optimization module 140 is communicatively connected to at least one of the UV controller and the UV LED module to receive or measure data based on the UV emission times for each UV LED or each area of UV LEDs. The LCD lifespan optimization module 140 is communicatively connected to the image processing module 110 and/or the LCD controller and/or the UV LED controller.

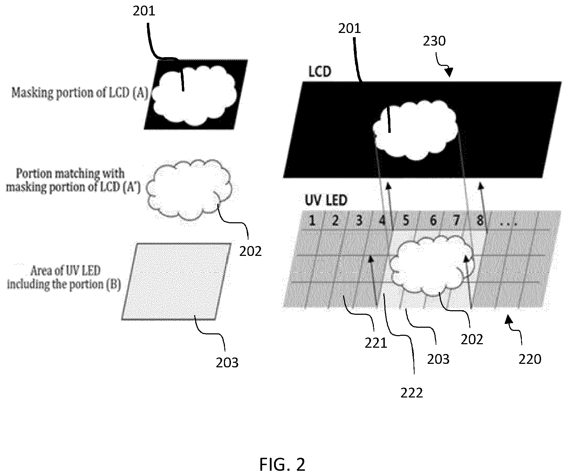

FIG. 2 is a schematic showing a method for controlling divided UV LED areas to emit UV light of UV LEDs only from an area matching with an LCD masking image of according to embodiments.

FIG. 2 shows an LCD 230 and a UV LED (backlight) array 220 comprising UV LEDs 221 individually identifiable by coordinate position in a grid. The UV LED array is arranged under the LCD to illuminate the LCD. Referring to FIG. 2, the UV LED emission area of each 2D image obtained by slicing the 3D image is calculated to optimize the lifespans of the UV LEDs. The diagonal length is calculated using any of the methods described above. For example, the diagonal length is calculated from an area obtained by multiplying a width of the image with the greatest area among the sliced 2D images by a height thereof. A radius defined as half of the diagonal length is used to obtain a UV LED emission area 203 (S = π r ², where S is emission area and r is radius). The UV LED emission area 203 corresponds to a matching area 202 (or portion) corresponding to the masking portion 201 of the LCD. In some embodiments, all UV LEDs lying fully or partially within the matching area are switched on when the curing process occurs. All other UV LEDs are turned off at that time.

Further, the LCD image per frame is output from the LCD area where the average accumulated emission time per area is shortest, thereby improving the lifespan of the LCD.

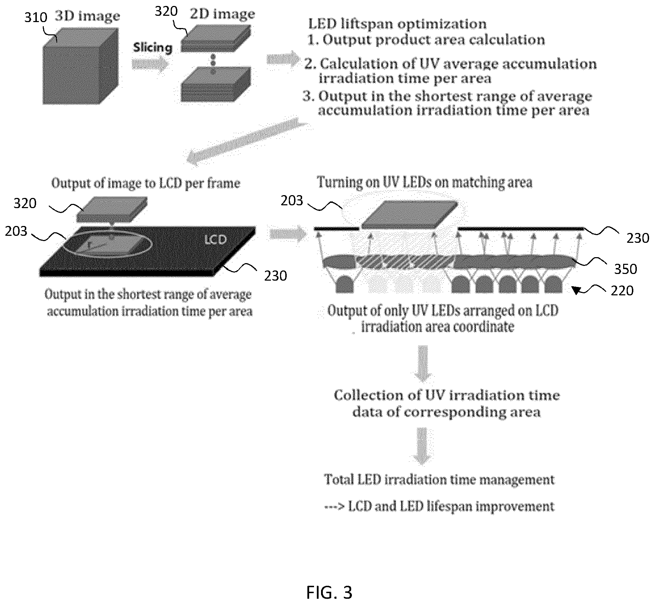

FIG. 3 is a schematic showing the output of the UV light of only the UV LEDs on an area matching with a sliced 2D image according to embodiments. As described earlier, the 3D virtual object (of 3D image) 310 is sliced into a series of 2D images.

Before the 2D images are sent to the LCD, the LED lifespan optimization module 140 calculates the optimal area of the LCD to which the 2D images are output as masking images. To perform this calculation, the LED lifespan optimization module gathers information about the accumulated emission time of each UV LED (or each area of UV LEDs) in the UV LED array. Based on this information, the LED lifespan optimization module calculates the average irradiation time per area of the LCD. The LED lifespan optimization module then determines based on this calculation, the optimum position (or area) for the LCD masking image in the LCD. The optimum position (or area) is determined as the area of the LCD which has the shortest average accumulated irradiation time per area of the LCD.

The 2D images are then sequentially output as LCD masking images 203 to the optimum position (or area) of the LCD for printing.

Referring to FIG. 3, the UV LEDs in the UV LED array 220 located on the area matching with the LCD masking image are turned on. In this case, projection lenses 350 for projecting the UV light of the UV LEDs onto an appropriate area are arranged between the UV LED array 220 and the LCD 230.

Further, the emission time data of the UV LEDs onto the corresponding LCD area are collected to manage total emission time of the UV LEDs irradiating the LCD area, thereby improving the lifespans of both of the LCD and the UV LEDs. That is, the frequency of use of the LCD area least exposed can be increased, and the LCD lifespan (of the area least exposed or the whole LCD) can be estimated.

As set forth in the foregoing, the present invention can extend the lifespan of the LCD of the conventional MSLA 3D printer.

In addition, the present invention can estimate and manage the lifespans of the LCD areas matching with the UV LEDs.

The foregoing description of the embodiments of the invention has been presented for the purpose of illustration; it is not intended to be exhaustive or to limit the invention to the precise forms disclosed. Persons skilled in the relevant art can appreciate that many modifications and variations are possible in light of the above teachings. It is therefore intended that the scope of the invention be limited not by this detailed description, but rather by the claims appended hereto.

The following alternative description of the Figures is also provided:
*FIG. 1* *is a block diagram showing a method for controlling UV LEDs of an MSLA 3D printer according to the present invention.*
*Referring to* *FIG. 1**, a method for improving a lifespan of an LCD of an MSLA 3D printer according to the present invention is carried out by controlling UV LEDs only on an area matching with a masking image of the LCD to thus irradiate UV light of the UV LEDs.*
*That is, the respective UV LEDs are controlled by area, and they are heated,* so *that the portion of the LCD onto which the UV light of the UV LEDs is irradiated is minimized.*
*To do this, first, a 3D image is sliced to produce 2D masking images. In this case, an LCD controller outputs an LCD image as the same image as the produced 2D masking image.*
*Further, a UV LED controller calculates a coordinate of an LED irradiation area and irradiates the UV light of the UV LEDs only on the area matching with the masking image. In the conventional MSLA 3D printer, that is, all of the UV LEDs are turned on and used* as *backlight, and then, only a desired portion is masked using the LCD. According to the present invention, however, the UV light of the UV LEDs is controlled only on area matching with the LCD masking image and thus irradiated from the corresponding area of the UV LEDs.*
*To calculate the LED irradiation area, the 3D image is sliced into the 2D images, first, a diagonal length is calculated from an area obtained by multiplying a width of the image with the greatest area among the sliced 2D images by a height thereof, and next, the radius of the diagonal length is calculated as the LED irradiation area (S* = *π r 2, where S is irradiation area and r is radius).*
*As the UV light of the UV LEDs only on the area corresponding to the coordinate of the LCD irradiation area is irradiated, further, the accumulation irradiation time of the UV LEDs located on the corresponding area is calculated to estimate the lifespan of the LCD.*
*Accordingly, the irradiation time data of the UV LEDs located on the corresponding area are collected to manage total irradiation time of the UV LEDs, so that the lifespans of both of the LCD and the UV LEDs can be improved.*
*Further, UV average accumulation irradiation time per area is calculated to allow output to the LCD area in the shortest range of the average accumulation irradiation time per area, thereby improving the lifespan of the LCD. That is, the frequency of use of the LCD area less exposed can be increased.*
*FIG. 2* *is a concept view showing a method for controlling divided UV LED areas to irradiate UV light of UV LEDs only from an area matching with a masking image of an LCD according to the present invention.*
*Referring to* *FIG. 2**, the LED irradiation area of each 2D image obtained by slicing the 3D image is calculated to optimize the lifespans of the UV LEDs. As described above, the diagonal length is calculated from an area obtained by multiplying a width of the image with the greatest area among the sliced 2D images by a height thereof, and next, the radius of the diagonal length is calculated as the LED irradiation area (S* = *π r 2, where S is irradiation area and r is radius).*
*Further, the LCD image per frame is outputted from the LCD area where the average accumulation irradiation time per area is shortest, thereby improving the lifespan of the LCD.*
*FIG. 3* *is a concept view showing the output of the UV light of only the UV LEDs on an area matching with a sliced 2D image according to the present invention.*
*Referring to* *FIG. 3**, the UV LEDs located on the area matching with the LCD image are turned on. In this case, projection lenses for projecting the UV light of the UV LEDs onto an appropriate area are optimizedly arranged on the LCD area.*
*Further, the irradiation time data of the UV LEDs onto the corresponding LCD area are collected to manage total irradiation time of the UV LEDs on the area, thereby improving the lifespans of both of the LCD and the UV LEDs. That is, the frequency of use of the LCD area less exposed can be increased, and the LCD liftspan by matching area can be estimated.*
*As set forth in the foregoing, the present invention can extend the lifespan of the LCD of the conventional MSLA 3D printer.*
*In addition, the present invention can estimate and manage the lifespans of the LCD areas matching with the UV LEDs.*

Also described herein are the following numbered embodiments:
Embodiment 1. A method for improving a lifespan of a liquid crystal display (LCD) of a masked stereolithography (MSLA) 3D printer, the method comprising the steps of:
   slicing a three-dimensional (3D) image into two-dimensional (2D) images;
   outputting the 2D images to the LCD;
   calculating irradiation area coordinates of UV LEDs in accordance with the 2D images; and
   irradiating UV light of the UV LEDs on an area matching with the 2D images in accordance with the calculated irradiation area coordinates of the UV LEDs.
Embodiment 2. The method according to embodiment 1, wherein the step of calculating the irradiation area coordinate of the UV LEDs is carried out by calculating a diagonal length from an area obtained by multiplying a width of the image with the greatest area among the sliced 2D images by a height thereof and then calculating the radius of the diagonal length as the LED irradiation area.
Embodiment 3. The method according to embodiment 1, further comprising the step of collecting and storing accumulation irradiation time data of the UV LEDs to calculate average irradiation time per area.
Embodiment 4. The method according to embodiment 3, wherein the images are outputted to an LCD area in the shortest range of the accumulation irradiation time.

## Claims

1. A method for improving a lifespan of a liquid crystal display "LCD" of a masked stereolithography "MSLA" 3D printer, the method comprising the steps of:
slicing a virtual three-dimensional "3D" object to create two-dimensional "2D" images;
outputting the 2D images to the LCD;
calculating emission area coordinates of UV LEDs in accordance with the 2D images; and
emitting UV light from the UV LEDs in an area matching with the 2D images in accordance with the calculated emission area coordinates of the UV LEDs.

2. The method according to claim 1, wherein the step of calculating the emission area coordinates of the UV LEDs is carried out by calculating a diagonal length from an area obtained by multiplying a width of the image with the greatest area among the 2D images by a height thereof and then calculating a radius of half the diagonal length and defining a circular area with said radius as the emission area.

3. The method according to claim 1 or 2, further comprising the step of collecting and storing accumulated emission time data of the UV LEDs to calculate average emission time per area.

4. The method according to claim 3, wherein the images are output to an LCD area corresponding to UV LEDs having the shortest accumulated emission times.

5. A masked stereolithography "MSLA" 3D printer comprising:
an image processing module (110) arranged to slice a virtual three-dimensional "3D" object to thereby create two-dimensional "2D" images;
an LCD controller (120) arranged to receive the 2D images from the image processing module;
a UV LED controller (130) arranged to calculate emission area coordinates of UV LEDs (222) in a UV LED array (220) in accordance with the 2D images;
wherein the UV controller is configured to control the UV LED array to emit light from the UV LEDs (222) in an area (203) matching with the 2D images in accordance with the calculated emission area coordinates of the UV LEDs (222).

6. The 3D printer according to claim 5, the UV LED controller is arranged to calculate the emission area coordinate of the UV LEDs by calculating a diagonal length from an area obtained by multiplying a width of the image with the greatest area among the 2D images by a height thereof and then calculating a radius of half the diagonal length and defining a circular area with said radius as the UV LED emission area.

7. The 3D printer according to claim 5 or 6, further comprising an LCD lifespan optimization module (140) arranged to collect and store accumulation emission time data of the UV LEDs to calculate average emission time per area of the UV LED array.

8. The method according to claim 7, wherein the LCD controller is arranged to output the 2D images to an area of an LCD corresponding to UV LEDs having the shortest accumulated emission times.
